# EUROPÄISCHE PATENTANMELDUNG

(11) **EP 4 435 076 A1**
(43) Veröffentlichungstag der Anmeldung: **25.09.2024**
(21) Anmeldenummer: 23163890.9
(22) Anmeldetag: 24.03.2023
(51) Int. Cl.: C10J 3/72, C10K 3/00

(54) **VERFAHREN ZUM HERSTELLEN EINES ROHSYNTHESEGASES MIT REDUZIERTEM ETHYLENGEHALT**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Covella, Karsten, 60388 Frankfurt am Main (DE); Haag, Stéphane, 60388 Frankfurt am Main (DE); Müller-Hagedorn, Matthias, 60388 Frankfurt am Main (DE); Williams, Bryce, 60388 Frankfurt am Main (DE)
(74) Vertreter: Air Liquide

(57) **Zusammenfassung**

Die Erfindung betrifft ein Verfahren zum Herstellen eines Wasserstoff und Kohlenoxide enthaltenden Rohsynthesegases durch nichtkatalytische Partialoxidation eines kohlenstoffhaltigen Einsatzstroms, der Biomasse und/oder organische Abfälle und/oder Kunststoffabfälle umfasst, wobei das erzeugte Rohsynthesegas einen signifikanten Ethylengehalt aufweist. Erfindungsgemäß wird die Vergasung des kohlenstoffhaltigen Einsatzstroms in einem ersten Schritt unter Bedingungen der nichtkatalytischen Niedertemperatur-Partialoxidation bei Temperaturen zwischen 600 und 1100 °C durchgeführt, dem sich ein zweiter Schritt unter Bedingungen der nichtkatalytischen Hochtemperatur-Partialoxidation bei Temperaturen oberhalb von 1100 °C anschließt, der der Umsetzung von Ethylen und anderen Kohlenwasserstoffen zu Synthesegasprodukten dient.

## Beschreibung

### Gebiet der Erfindung

Die Erfindung betrifft ein Verfahren zum Herstellen eines Wasserstoff und Kohlenoxide enthaltenden Rohsynthesegases durch nichtkatalytische Partialoxidation eines kohlenstoffhaltigen Einsatzstroms, der Biomasse und/oder organische Abfälle und/oder Kunststoffabfälle umfasst, wobei das erzeugte Rohsynthesegas einen signifikanten Ethylengehalt aufweist.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Wasserstoff für die Ammoniaksynthese nach dem Haber-Bosch-Verfahren oder die Fischer-Tropsch-Synthese.

Ein gängiges Verfahren zur Herstellung von Synthesegasen ist die autotherme Flugstromvergasung von gasförmigen, flüssigen oder festen Brennstoffen, wie sie beispielsweise in der DE 10 2006 059 149 B4 beschrieben ist. Am Kopf eines Reaktors sind zentral ein Zünd- und Pilotbrenner sowie rotationssymmetrisch zur Reaktorachse drei Vergasungsbrenner angeordnet. Über die Vergasungsbrenner wird einem Vergasungsraum des Reaktors Kohlenstaub mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur Kühlung von Rohgas und Schlacke Wasser eingedüst wird. Die Schlacke lagert sich im Wasserbad ab und wird über einen Schlackeaustrag abgeführt. Das gequenchte Rohgas wird wasserdampfgesättigt aus dem Quenchraum abgezogen und in nachfolgenden Reinigungsstufen gereinigt. Da der Brennstoff direkt mit dem Oxidationsmittel umgesetzt wird, müssen Oxidationsmittel und Brennstoff koaxial oder koannular zugeführt werden.

Auch die US 5,549,877 A1 beschreibt ein Verfahren und eine Vorrichtung zur Herstellung von Synthesegas, wobei ein sauerstoffhaltiges Oxidationsmittel zentral am Reaktorkopf zugeführt und gemeinsam mit ringförmig um die Oxidationsmittelzufuhr zugeführtem Brennstoff in den Reaktionsraum eingeführt wird, in dem der Brennstoff zunächst unterstöchiometrisch umgesetzt wird. Es bildet sich eine Flamme aus, die nach unten in den Reaktionsraum fortschreitet. In einer Rezirkulationszone strömen die in der Flamme vorhandenen Materialien nach oben zurück. In die Reaktionszone wird stromabwärts über eine ringförmige Leitung ein zusätzlicher Strom an Oxidationsmittel zugeführt, so dass sich eine weiter ausgedehnte Flammenzone bildet.

Typischerweise wird die partielle Oxidation von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Reaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel angebracht.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, angereicherte Luft oder reiner Sauerstoff (mit mindestens 95 mol% Sauerstoff) eingesetzt. Ein kohlenwasserstoffhaltiger Beschickungsstrom ist ein Strom, der Kohlenwasserstoffe wie Methan oder höhere Kohlenwasserstoffe oder andere wasserstoff- und kohlenstoffhaltige Moleküle (z. B. Alkohole wie Methanol, Ethanol) enthält. Dies kann auch ein Strom sein, der von einem vorgeschalteten Primärreformer kommt und neben Kohlenmonoxid (CO), Wasserstoff (H₂), CO₂ und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Im Zuge der Energiewende ist das Interesse an der Vergasung von Abfällen und Biomasse gestiegen, um dem öffentlichen Bedarf an Kreislaufwirtschaft und Dekarbonisierung von Prozessen gerecht zu werden. Im Gegensatz zur Flugstromvergasung von Kohle und Öl wird die Vergasung fester Einsatzstoffe in der Regel in wesentlich kleinerem Maßstab, bei niedrigem Druck und Temperaturen unter 1000 °C durchgeführt. Unter diesen Umständen ist die Kohlenstoffumwandlung begrenzt und das Rohsynthesegas enthält mehrere Prozent Kohlenwasserstoffe. Unter diesen ist Ethylen nach Methan und ggf. Ethan der Hauptbestandteil, der nicht wirtschaftlich aus dem Synthesegasstrom entfernt werden kann und in den nachgeschalteten Syntheseschritten Probleme verursachen kann, insbesondere wenn diese das Kontaktieren des Synthesegases mit einem Katalysator umfassen.

Die Entfernung von Kohlenwasserstoffen und anderen störenden Nebenprodukten aus Rohsynthesegasen ist bereits in der Fachliteratur behandelt worden.

In der Patentschrift EP3516016 B1 wird ein kombiniertes System zur Entfernung von Feststoffen und Teer beschrieben, das zweistufige Zyklone und eine Oxidationsmitteleinspritzung für einen Brenner vor einem Katalysator zur Teerreformierung umfasst. Der Brenner erhöht die Temperatur des Vergasungsabflusses, so dass die verbleibenden Feststoffe agglomerieren und an den Wänden anhaften können. Der zusätzliche Schritt der katalytischen Umwandlung ist dann erforderlich, um die Teere umzuwandeln und ein ausreichend sauberes Synthesegas zu erhalten.

Die internationale Patentveröffentlichung WO 2021/191924 A1 beschreibt einen integrierten Vergaser mit getrennten Zonen für Trocknung, Pyrolyse und Vergasung. Die Gasphase wird aus dem Pyrolysebereich abgezogen und durch einen Brenner geleitet, um Teer umzuwandeln und Wärme für die Vergasungszone und - mit einem integrierten Wärmetauscher - auch für die Pyrolysezone bereitzustellen.

Die internationale Patentveröffentlichung WO 2021/191925 A1 beschreibt die Zugabe eines Oxidationsmittels zum Produktgas eines Vergasers in einem Mantel, der den Vergaserkörper umgibt. Durch diesen Zusatz wird die Temperatur des Produktgases für die Dampfreformierung von Teer und Kohlenwasserstoffen im integrierten Vergasersystem erhöht.

Nachteilig bei den genannten Arbeiten aus dem Stand der Technik ist es dabei, dass die Entfernung von Ethylen nicht ausdrücklich erwähnt wird.

### Beschreibung der Erfindung

Die Aufgabe der vorliegenden Erfindung besteht daher darin, ein Verfahren anzugeben, das die erwähnten Nachteile der aus dem Stand der Technik bekannten Verfahren nicht aufweist, und das insbesondere das Herstellen eines Rohsynthesegases durch nichtkatalytische Partialoxidation eines kohlenstoffhaltigen Einsatzstroms lehrt, wobei das erzeugte Rohsynthesegas einen signifikanten Ethylengehalt aufweist. Der kohlenstoffhaltige Einsatzstrom umfasst dabei Biomasse und/oder organische Abfälle und/oder Kunststoffabfälle.

Diese Aufgabe wird in einem ersten Aspekt der Erfindung durch ein Verfahren mit den Merkmalen des Anspruchs 1 gelöst. Weitere Ausgestaltungen der Erfindung ergeben sich aus den abhängigen Verfahrensansprüchen.

Unter fluiden oder fluidisierten kohlenstoffhaltigen Brennstoffen oder kohlenstoffhaltigen Einsatzstoffströmen sind alle Gase, Flüssigkeiten, Schlämme, Aerosole und pneumatisch geförderten Feststoffpartikel zu verstehen, die Kohlenstoff in elementarer oder chemisch gebundener Form enthalten und die unter einer angelegten Scherspannung, einer äußeren Kraft oder einem Druckunterschied kontinuierlich fließen. Eine nicht ausschließliche Liste von Beispielen umfasst kohlenwasserstoffhaltige Gase wie Erdgas, kohlenwasserstoffhaltige Flüssigkeiten wie Naphtha, Erdölfraktionen, flüssige Raffinerierückstände, feste kohlenstoffhaltige Partikel wie Kohle- oder Kokspulver oder -stäube.

Mit dem Begriff Biomasse wird die Stoffmasse von Lebewesen oder deren Teile bzw. Körperteile bezeichnet. Im Rahmen der vorliegenden Erfindung wird darunter insbesondere lignocellulosehaltige Biomasse verstanden. Kennzeichen der Biomasse ist ihre fortlaufende Erneuerbarkeit durch Nachwachsen.

Unter einem sauerstoffhaltigen Oxidationsmittel ist grundsätzlich jedes sauerstoffhaltige Fluid zu verstehen, wie z. B. reiner Sauerstoff mit beliebigem Reinheitsgrad, Luft oder jedes andere Fluid, das in der Lage ist, einem kohlenstoffhaltigen Reaktanten Sauerstoff zuzuführen. Gegebenenfalls werden im einzelnen Sachzusammenhang spezifische sauerstoffhaltige Oxidationsmittel genannt.

Unter einem Partialoxidationskatalysator werden alle katalytisch wirksamen Stoffe, insbesondere alle katalytisch wirksamen Feststoffe verstanden, die in der Lage sind, die Herstellung von Synthesegasprodukten aus kohlenstoffhaltigen Einsatzstoffen oder Einsatzströmen unter Bedingungen der katalytischen Partialoxidation zu bewirken oder zu beschleunigen. Dabei ist unmaßgeblich, ob diese Stoffe gemäß ihrer Bezeichnung oder gemäß von Herstellerempfehlungen oder etwaiger kommerzieller Produktbezeichnungen für diesen Einsatzzweck vorgesehen sind oder nicht.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ableiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist "Dampf" als Synonym für Wasserdampf zu verstehen, sofern nicht im Einzelfall das Gegenteil angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Unter einem Schachtreaktor wird im Zusammenhang mit der vorliegenden Offenbarung ein Festbettreaktor ohne weitere Einbauten innerhalb des Festbettes und ohne weitere Unterteilung des Festbettes (beispielsweise in Rohrbündeln) verstanden.

Die Bedingungen der nichtkatalytischen Partialoxidation von kohlenstoffhaltigen Einsatzströmen wie Biomasse, organischen Abfällen oder Kunststoffabfällen, sind dem Fachmann aus dem Stand der Technik bekannt und auch unter der alternativen Bezeichnung Vergasung geläufig; es wird hierbei auf die eingangs erörterten Dokumente und das grundlegende Fachbuch "Gasification", C. Higman, M. van der Burgt, Gulf Professional Publishing, Elsevier (2003), Kapitel 5.3 "Entrained-flow Gasifiers" und Kapitel 5.4 "Oil Gasification and Partial Oxidation of Natural Gas" verwiesen. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondere ist es kennzeichnend für die nichtkatalytische Partialoxidation, dass kein Katalysator in dem Partialoxidationsreaktor vorhanden ist.

Notwendige Anpassungen der Bedingungen der nichtkatalytischen Partialoxidation an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Im Zusammenhang mit der vorliegenden Beschreibung wird zwischen der nichtkatalytischen Niedertemperatur-Partialoxidation und der nichtkatalytische Hochtemperatur-Partialoxidation unterschieden. Das wesentliche Unterscheidungsmerkmal ist dabei der jeweils anzuwendende Temperaturbereich: Während die nichtkatalytische Niedertemperatur-Partialoxidation bei Temperaturen zwischen 600 und 1100 °C abläuft, liegt der kennzeichnende Temperaturbereich für die nichtkatalytische Hochtemperatur-Partialoxidation zwischen 1100 und 1400 °C.

Bei nichtkatalytischen Partialoxidationsreaktoren erfolgt die Umsetzung der Einsatzströme mit einem sauerstoffhaltigen Oxidationsmittel in einer Reaktionskammer mit einem oder mehreren Brennern, denen sich stromabwärts eine Abkühlzone anschließt, die oft als Quenchkammer ausgestaltet ist. Die Reaktionskammer besteht im Wesentlichen aus einem feuerfest ausgemauerten oder zugestellten Leervolumen, dessen Wände in einigen Ausgestaltungen gekühlt werden.

Die Begriffe Eingang, Einlass, eingangsseitig, Ausgang, Auslass, ausgangsseitig beziehen sich auf die Strömungsrichtung der Einsatzstoffe durch den Partialoxidationsreaktor.

Der Erfindung liegen die nachfolgenden Überlegungen und Erkenntnisse zugrunde:
Um ein durch Vergasung von Biomasse, organischen Abfällen oder Kunststoffabfällen erzeugtes Synthesegas für nachgeschaltete chemische Synthesen zu nutzen, sind mehrere Reinigungsschritte, beispielsweise Waschschritte und/oder Adsorptionsschritte erforderlich, um höhere Kohlenwasserstoffe zu entfernen, die sonst zu einer schnellen Deaktivierung von Katalysatoren und zur Koksbildung in nahgeschalteten Anlagenteilen führen können. Außerdem können die im Rohsynthesegas vorhandenen leichten Alkane und Alkene mit den aus dem Stand der Technik bekannten Methoden nicht oder nur unter Schwierigkeiten entfernt werden. Beispielsweise ist vor der Durchführung einer nachgeschalteten katalytischen Synthese ein zusätzlicher Hydrierungsschritt erforderlich, um ungesättigte, leichte Kohlenwasserstoffe wie z. B. Ethylen umzusetzen.

Eine Alternative ist die Hochtemperaturvergasung bei Temperaturen oberhalb von 1100 °C), die sich zur Entfernung von Teeren und zur Umwandlung von Spurenkomponenten, einschließlich leichter Kohlenwasserstoffe wie z. B. Methan, als wirksam erweisen kann. Die Handhabung der dabei erhaltenen Asche kann dabei jedoch ein Problem darstellen. Sie lässt sich insbesondere nicht in einfacher Weise beispielsweise durch Filtration aus dem Rohsynthesegas abtrennen, da sie unter den Bedingungen der Hochtemperaturvergasung in geschmolzener Form vorliegt.

Der Erfindung liegt daher die Erkenntnis zugrunde, dass es vorteilhaft ist, die Vergasung der kohlenstoffhaltigen Einsatzstoffe, die insbesondere Biomasse, organischen Abfälle oder Kunststoffabfälle oder Mischungen dieser Komponenten enthält, zunächst als nichtkatalytische Niedertemperatur-Partialoxidation durchzuführen. Dieser ist eine nichtkatalytischen Hochtemperatur-Partialoxidation nachgeschaltet, die der Entfernung von Ethylen dient und bei der Ethylen und andere im Rohsynthesegas vorhandene Kohlenwasserstoffe weitgehend entfernt werden. Dabei ist es vorteilhaft, dass die entfernten Substanzen nicht als Kohlenstoffträger verloren gehen, sondern es wird vielmehr die Ausbeute an Synthesegasprodukten, vor allem an Kohlenmonoxid, gesteigert.

### Bevorzugte Ausgestaltungen der Erfindung

Ein zweiter Aspekt der Erfindung ist dadurch gekennzeichnet, dass der erste Rohsynthesegasstrom einem Partikelabscheidungsschritt zugeführt wird und in den zweiten Partialoxidationsreaktor ein erster, an Partikeln abgereicherter Rohsynthesegasstrom eingeleitet wird. Dies verringert etwaige Partikel- bzw. Feststoffablagerungen im zweiten Partialoxidationsreaktor, so dass dieser länger ohne zwischenzeitliches Abschalten und Reinigen betrieben werden kann.

Ein dritter Aspekt der Erfindung ist dadurch gekennzeichnet, dass der zweite Partialoxidationsreaktor kein Element aus der folgenden Gruppe enthält: Statischer Mischer, Füllkörper-Schüttung, fester Partialoxidationskatalysator. Wegen der Auslegung und des Betriebs des zweiten Partialoxidationsreaktors als nichtkatalytischer Partialoxidationsreaktor kann auf Katalysatoren der genannten Art verzichtet werden, so dass keine Gefahr einer Katalysatordesaktivierung besteht.

Ein vierter Aspekt der Erfindung ist dadurch gekennzeichnet, dass die Beheizung des zweiten Partialoxidationsreaktors autotherm durch die bei der nicht-katalytischen Hochtemperatur-Partialoxidation freiwerdende Wärme erfolgt. Dies erspart zusätzliche Heizvorrichtungen und Heizenergie für die Beheizung des zweiten Partialoxidationsreaktors. Die Investitionskosten und der Energiebedarf des Verfahrens an extern zugeführter Heizenergie verringern sich.

Ein fünfter Aspekt der Erfindung ist dadurch gekennzeichnet, dass der erste Oxidationsmittelstrom mindestens ein Oxidationsmittel umfasst, dass aus der folgenden Gruppe ausgewählt wird: Luft, Sauerstoff, mit Sauerstoff angereicherte Luft, Dampf, Kohlendioxid.

Ein sechster Aspekt der Erfindung ist dadurch gekennzeichnet, dass der zweite Oxidationsmittelstrom mindestens ein Oxidationsmittel umfasst, dass aus der nachfolgenden Gruppe ausgewählt wird: Luft, Sauerstoff, mit Sauerstoff angereicherte Luft.

Ein siebter Aspekt der Erfindung ist dadurch gekennzeichnet, dass der zweite Rohsynthesegasstrom einem weiteren Reinigungs-, Konditionierungs- oder Verarbeitungsschritt zugeführt wird. Dieser bestimmt sich im Wesentlichen nach der Art der nachfolgend geplanten Verwendung des Synthesegases. Soll beispielsweise die Wasserstoffausbeute maximiert werden, ist es günstig, das Rohsynthesegas einer CO-Konvertierungsstufe zuzuführen. Falls es gewünscht oder erforderlich ist, kann im Rohsynthesegas oder im konvertierten Synthesegas enthaltenes Kohlendioxid durch eine geeignete Gaswäsche, beispielsweise mit einem aminhaltigen Waschmittel, abgetrennt werden.

Ein achter Aspekt der Erfindung ist dadurch gekennzeichnet, dass der zweite Rohsynthesegasstrom einem weiteren Verarbeitungsschritt zugeführt wird, wobei der Verarbeitungsschritt ein Syntheseverfahren umfasst, dass aus der nachfolgenden Gruppe ausgewählt wird: Methanolsynthese, Dimethylether-Synthese, Fischer-Tropsch-Synthese, Oxosynthese, Herstellung von Phosgen, Herstellung von Essigsäure, Herstellung von Polycarbonat.

Ein neunter Aspekt der Erfindung ist dadurch gekennzeichnet, dass der erste und/oder der zweite Oxidationsmittelstrom Sauerstoff enthält, der mittels Elektrolyse von Wasser erzeugt wird, wobei der zweite Rohsynthesegasstrom einem weiteren Verarbeitungsschritt zugeführt wird, dem als weiterer Einsatzstoff der als Koppelprodukt der Elektrolyse erhaltene Wasserstoff zugeführt wird. Dies ist vorteilhaft, da mittels nichtkatalytischer Partialoxidation ein Synthesegas erhalten wird, das relativ wasserstoffarm ist. Für viele Anwendungen ist aber ein definierter, erhöhter Wasserstoffgehalt im Synthesegas erforderlich. Daher kann gemäß des neunten Aspekts der Erfindung der Wasserstoffgehalt entsprechend eingestellt werden. Auf diese Weise wird der als Koppelprodukt der Elektrolyse erhaltene Wasserstoff wertschöpfend genutzt.

Ein zehnter Aspekt der Erfindung ist dadurch gekennzeichnet, dass die Gaszusammensetzung in der zweiten Reaktionskammer mit einer Analysenmethode periodisch oder kontinuierlich analysiert wird. Auf diese Weise kann der Reaktionsfortschritt der Oxidation von Ethylen periodisch oder kontinuierlich verfolgt werden. Störungen im Betrieb des zweiten Partialoxidationsreaktors können auf diese Weise frühzeitig erkannt werden.

Ein elfter Aspekt der Erfindung ist dadurch gekennzeichnet, dass die Bedingungen der nichtkatalytischen Hochtemperatur-Partialoxidation so verändert werden, dass die mit der Analysenmethode gemessene Ethylen-Konzentration kleiner als 100 Vol.-ppm, bevorzugt kleiner als 10 Vol.-ppm, meist bevorzugt kleiner als 1 Vol.-ppm auf Trockenbasis beträgt. Untersuchungen haben ergeben, dass diese Ethylen-Konzentrationen einen sicheren Betrieb nachgeschalteter Verfahren bzw. Anlagen gewährleistet, ohne dass es zu einer raschen Desaktivierung dort enthaltener Katalysatoren kommt.

Ein zwölfter Aspekt der Erfindung ist dadurch gekennzeichnet, dass der Mengenstrom des zweiten Oxidationsmittelstroms so verändert wird, dass die mit der Analysenmethode gemessene Ethylen-Konzentration kleiner als 100 Vol.-ppm, bevorzugt kleiner als 10 Vol.-ppm, meist bevorzugt kleiner als 1 Vol.-ppm auf Trockenbasis beträgt. Untersuchungen haben ergeben, dass mit dieser spezifischen Maßnahme die Ethylen-Konzentration so eingestellt werden kann, dass ein sicherer Betrieb nachgeschalteter Verfahren bzw. Anlagen gewährleistet ist, ohne dass es zu einer raschen Desaktivierung dort enthaltener Katalysatoren kommt.

Ein dreizehnter Aspekt der Erfindung ist dadurch gekennzeichnet, dass die Analysenmethode aus der folgenden Gruppe ausgewählt wird: Infrarot-Spektrometrie, Raman-Spektrometrie, Gaschromatographie.

Ein vierzehnter Aspekt der Erfindung ist dadurch gekennzeichnet, dass die Analysenmethode mittels eines nach dieser Methode arbeitenden Analysengeräts durchgeführt ist, wobei das Analysengerät über eine Leitung mit der zweiten Reaktionskammer verbunden ist und in Fluidverbindung mit dem Gasraum der zweiten Reaktionskammer steht.

Ein fünfzehnter Aspekt der Erfindung ist dadurch gekennzeichnet, dass das erste Rohsynthesegas vor dem Einleiten in den zweiten Partialoxidationsreaktor keinen Verdichtungsschritt durchläuft. Dies spart Verdichtungsenergie bzw. Investitionskosten und Aufstellplatz für zusätzliche Verdichter.

Ein sechzehnter Aspekt der Erfindung ist dadurch gekennzeichnet, dass der zweite Rohsynthesegasstrom einem Kohlendioxid-Abtrennungsschritt zugeführt wird, wobei ein Kohlendioxid-Reichgasstrom erhalten wird, der mindestens teilweise als Oxidationsmittel und/oder Moderator zum ersten Partialoxidationsreaktor zurückgeführt wird. Auf diese Weise kann das Nebenprodukt Kohlendioxid stofflich genutzt werden, anstatt es an die Umgebung abzugeben oder anderweitig zu entsorgen.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

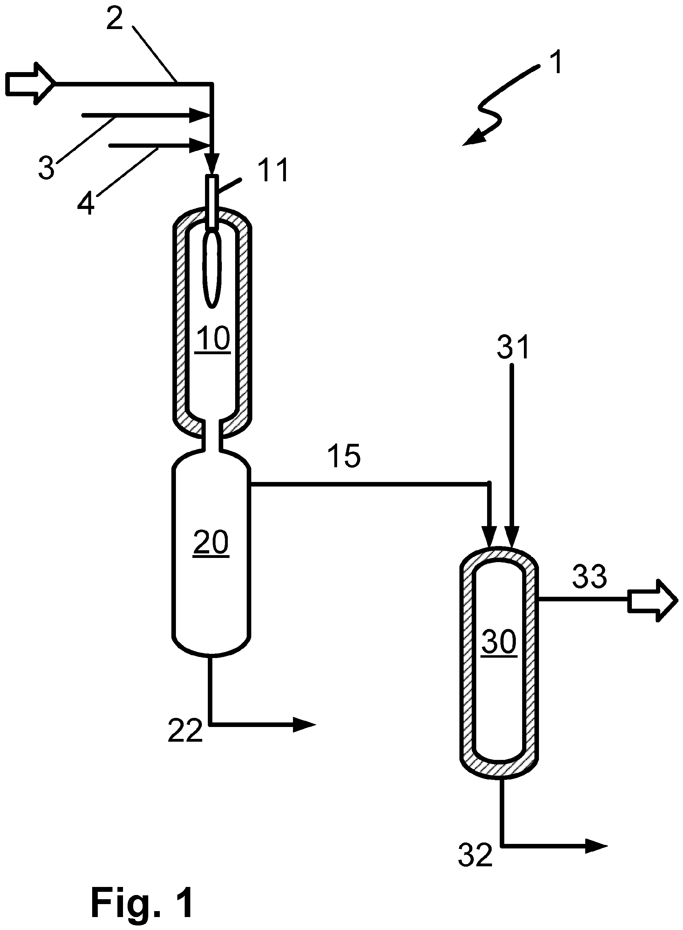

Es zeigt die einzige Figur
- Fig. 1: eine schematische Darstellung eines Verfahrens bzw. einer Anlage zur Synthesegaserzeugung gemäß einer Ausgestaltung der Erfindung.

In dem in Fig. 1 schematisch dargestellten Verfahren 1 bzw. Anlage 1 zur Synthesegaserzeugung gemäß einer Ausgestaltung der Erfindung durch nichtkatalytische Partialoxidation beispielsweise von Biomasse, organischen Abfälle, Kunststoffabfällen oder Mischungen dieser Einsatzstoffe werden der Reaktionskammer 10 des ersten Partialoxidationsreaktors der kohlenstoffhaltige Einsatzstrom über Leitung 2, einen ersten Feed-Einlass (nicht gezeigt) und Brenner 11, Wasserdampf als Moderator über Leitung 3 und Brenner 11 und Sauerstoff als Oxidationsmittel über Leitung 4, einen ersten Oxidationsmittel-Einlass (nicht gezeigt) und Brenner 11 zugeführt. Die detaillierte Medienführung ist in der Figur bildlich nicht dargestellt; so kann stromaufwärts des Brenners oder im Brenner selber eine Vorvermischung eines oder mehrerer der Medien, beispielsweise des Pyrolyse-öls oder des Oxidationsmittels oder beider, mit dem Moderator erfolgen, wobei als Moderator Wasserdampf oder Kohlendioxid oder Mischungen dieser Stoffe verwendet wird.

Im dargestellten Ausführungsbeispiel ist der erste Partialoxidationsreaktor als POX-Reaktor mit mindestens einem Brenner 11 ausgestaltet, der als Koaxialbrenner mit einem Zentralkanal mit kreisförmigem Querschnitt und mindestens einem, den Zentralkanal koaxial und konzentrisch umgebenden, ringspaltförmigen Außenkanal ausgestaltet ist. Der kohlenstoffhaltige Einsatzstrom wird in fluider oder fluidisierbarer Form bereitgestellt. Der kohlenstoffhaltige Einsatzstrom, der erste Oxidationsmittelstrom und der optionale Moderatorstrom werden durch den Zentralkanal und/oder den mindestens einen Außenkanal in den POX-Reaktor eingeleitet.

Die Umsetzung des ersten Einsatzstroms mit dem Oxidationsmittel zu einem Rohsynthesegas erfolgt unter Bedingungen der nichtkatalytischen Niedertemperatur-Partialoxidation bei Temperaturen zwischen 600 und 1100 °C, bevorzugt zwischen 700 und 1000 °C, und Drücken zwischen 1 und 100 bara im Brenner 11 und/oder in der stromabwärts des Brenners 11 angeordneten Reaktionskammer 10 des ersten Partialoxidationsreaktors zu einem ersten Rohsynthesegasstrom, der Wasserstoff, Kohlenmonoxid, Kohlendioxid und Ethylen enthält.

Der erste Rohsynthesegasstrom tritt eine Verbindungsleitung in die Austrittskammer 20 des ersten Partialoxidationsreaktors ein, die als Partikelabscheider ausgestaltet ist. Etwaige Asche- und/oder Kokspartikel sammeln sich im unteren Teil der Austrittskammer 20 und werden über Leitung 22 abgezogen. Das dabei erhaltene, von Feststoffpartikeln weitgehend befreite Rohsynthesegas wird nachfolgend über Leitung 15 aus der Partialoxidationsanlage ausgeleitet und der Weiterverarbeitung oder Weiterbehandlung zugeführt.

Über Leitung 15 wird der erste Rohsynthesegasstrom aus dem ersten Partialoxidationsreaktor über einen ersten Auslass (nicht gezeigt) ausgeleitet und in den zweiten Partialoxidationsreaktor 30 über einen zweiten Feed-Einlass (nicht gezeigt) eingeleitet.

Der zweite Partialoxidationsreaktor 30 umfasst neben einem Reaktormantel eine feuerfeste Ausmauerung, ist aber ansonsten mit keinerlei Einbauten versehen und enthält insbesondere keinen Oxidationskatalysator.

Dem zweiten Partialoxidationsreaktor 30 wird gemäß Fig. 1 über Leitung 31 und einen zweiten Oxidationsmittel-Einlass (nicht gezeigt) ein zweiter Oxidationsmittelstrom, beispielsweise Sauerstoff oder mit Sauerstoff angereicherte Luft, zugeführt. In alternativer Ausgestaltung entfällt Leitung 31 und der zweite Oxidationsmittel-Einlass und es wird nur der im ersten Rohsynthesegasstrom enthaltene Restsauerstoff als Oxidationsmittel genutzt.

Die Umsetzung des ersten Rohsynthesegasstroms mit dem zweiten Oxidationsmittelstrom erfolgt im zweiten Partialoxidationsreaktor 30 unter Bedingungen der nichtkatalytischen Hochtemperatur-Partialoxidation bei Temperaturen zwischen 1100 und 1400 °C und Drücken zwischen 1 und 100 bara im zweiten Partialoxidationsreaktor zu einem zweiten Rohsynthesegasstrom, der Wasserstoff, Kohlenmonoxid, Kohlendioxid und Ethylen umfasst und gegenüber dem ersten Rohsynthesegasstrom an Ethylen abgereichert und an Kohlenmonoxid angereichert ist. Der zweite Rohsynthesegasstrom wird über einen zweiten Auslass (nicht gezeigt) und Leitung 33 aus dem zweiten Partialoxidationsreaktor 30 ausgeleitet und optional einem weiteren Reinigungs-, Konditionierungs- oder Verarbeitungsschritt zugeführt. Über Leitung 32 werden Feststoffpartikel, beispielsweise Asche- oder Kokspartikel, oder Schlacke aus dem zweiten Partialoxidationsreaktor 30 abgezogen.

### Zahlenbeispiele

Es werden zwei Beispiele für verschiedene Rohsynthesegase gegeben, die einer partiellen Oxidation zugeführt werden. Der Prozess der partiellen Oxidation wurde unter der Annahme eines thermodynamischen Gleichgewichts bei 1250°C und 1350°C durch Zugabe der entsprechenden Sauerstoffmenge berechnet.

### Anwendungsbeispiel 1 (Erfindung):

Als erstes Anwendungsbeispiel wird ein erstes Rohsynthesegas aus der Luftvergasung von Stroh in einer zirkulierenden Wirbelschicht verwendet, wie es in folgender Literaturstelle beschrieben wurde: R. Harb, R. Rivera-Tinoco, M. Nemer, B. Zeghondy, C. Bouallou; Process Simulation of Tar Removal from Gasification Producer Gas, Chemical Engineering Transactions, Vol. 81, 2020. Die entsprechende Zusammensetzung des Rohgases ist in Tabelle 1 angegeben.

In Tabelle 2 sind folgende wichtige Parameter für die Umsetzung des ersten Rohsynthesegases im zweiten nichtkatalytischen Partialoxidationsreaktor aufgeführt:
Sauerstoff-Brennstoff-Äquivalenzverhältnis *λ*, Zusammensetzung des Rohgases und des entstehenden Gases, Kohlenwasserstoffumwandlung *X*_{HC}, relative Synthesegasausbeute *Y*_{SG} (Verhältnis H₂+CO im zweiten Rohsynthesegasstrom zu H₂+CO im ersten Rohsynthesegasstrom).

Die CO-Produktion wird durch den Prozess der partiellen Oxidation um mehr als 60 % gesteigert, wobei die Kohlenwasserstoffe weitgehend umgewandelt werden und nur wenig Methan verbleibt.

**Tabelle 1: Zusammensetzung erstes Rohsynthesegas aus der Luftvergasung von Stroh**

| **Komponente** | **Rohgaszusammensetzung** |
|---|---|
| H₂ | 2,86 Vol-% |
| H₂O | 18,4 Vol-% |
| CO | 13,3 Vol-% |
| CO₂ | 11,8 Vol-% |
| N₂ | 48,1 Vol-% |
| CH₄ | 3,51 Vol-% |
| Ethylen | 1,38 Vol-% |
| Benzol | 0,50 Vol-% |
| Toluol | 0,08 Vol-% |
| Teer | 7098 mg/Nm³ |

**Tabelle 2: Verfahrensparameter und Gaszusammensetzung für ausgewählte Hauptkomponenten nach dem vorgeschlagenen Verfahren, Eingangsgas aus Tabelle 1**

| **τ** | *λ* | **Molenbrüche Erstes Rohsynthesegas** | | | | | **Molenbrüche Zweites Rohsynthesegas** | | | | | **X_{HC}** | **Y_{SG}** |
|---|---|---|---|---|---|---|---|---|---|---|---|---|---|
| °C | | H2 | CO | CO2 | CH4 | Ethylen | H2 | CO | CO2 | CH4 | Ethylen | mol/ mol | mol/ mol |
| 1250 | 0.308 | 0.035 | 0.163 | 0.145 | 0.043 | 0.017 | 0.128 | 0.228 | 0.144 | 0.000 | 0.000 | 1 | 2.126 |
| 1350 | 0.348 | 0.035 | 0.163 | 0.145 | 0.043 | 0.017 | 0.115 | 0.226 | 0.152 | 0.000 | 0.000 | 1 | 2.003 |

### Anwendungsbeispiel 2 (Erfindung):

Das zweite Anwendungsbeispiel betrachtet ein erstes Rohsynthesegas aus der Doppelwirbelschicht-Dampfvergasung von gemischten Kunststoffen unter der Annahme einer ähnlichen Zusammensetzung wie in der Veröffentlichung von V. Wilk, H. Hofbauer: Conversion of mixed plastic waste in a dual fluidized bed steam gasifier, Fuel, Volume 107, 2013, 787-799.

Die Zusammensetzung des ersten Rohsynthesegases, das der partiellen Oxidation bei 1250°C und 1350°C unterzogen wurde, ist in Tabelle 3 aufgeführt. In Tabelle 4 sind wichtige Parameter für die Umsetzung des ersten Rohsynthesegases im zweiten nichtkatalytischen Partialoxidationsreaktor zusammengestellt. Die CO-Produktion wird in diesem Anwendungsbeispiel fast verdoppelt, während alle Kohlenwasserstoffe umgewandelt werden und nur wenig Methan verbleibt.

Änderungen an den im Vorstehenden beschriebenen Ausführungsformen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

**Tabelle 3: Zusammensetzung erstes Rohsynthesegas aus der aus der Doppelwirbelschicht-Dampfvergasung von gemischten Kunststoffen**

| **Komponente** | **Rohgaszusammensetzung** |
|---|---|
| H₂ | 38,5 Vol-% |
| H₂O | 26,3 Vol-% |
| CO | 17,5 Vol-% |
| CO₂ | 5,26 Vol-% |
| N₂ | 0 Vol-% |
| CH₄ | 8,89 Vol-% |
| Ethylen | 3,50 Vol-% |
| Teere, einschließlich Benzol und Toluol | 18,7 g/Nm³ |

**Tabelle 4: Verfahrensparameter und Gaszusammensetzung für ausgewählte Hauptkomponenten nach dem vorgeschlagenen Verfahren, Eingangsgas aus Tabelle 3**

| **τ** | *λ* | **Molenbrüche Erstes Rohsynthesegas** | | | | | **Molenbrüche Zweites Rohsynthesegas** | | | | | **X_{HC}** | **Y_{SG}** |
|---|---|---|---|---|---|---|---|---|---|---|---|---|---|
| °C | | H2 | CO | CO2 | CH4 | Ethylen | H2 | CO | CO2 | CH4 | Ethylen | mol/ mol | mol/ mol |
| 1250 | 0.186 | 0.520 | 0.237 | 0.071 | 0.120 | 0.045 | 0.600 | 0.339 | 0.061 | 0.000 | 0.000 | 1.000 | 1.719 |
| 1350 | 0.205 | 0.520 | 0.237 | 0.071 | 0.120 | 0.046 | 0.590 | 0.348 | 0.061 | 0.000 | 0.000 | 1.000 | 1.680 |

### Bezugszeichenliste

- [1]: Verfahren bzw. Anlage zur Synthesegaserzeugung
- [2]: Leitung
- [3]: Leitung
- [4]: Leitung
- [10]: Reaktionskammer des ersten Partialoxidationsreaktors
- [11]: Brenner
- [15]: Leitung
- [20]: Austrittskammer des ersten Partialoxidationsreaktors
- [22]: Leitung
- [30]: zweiter Partialoxidationsreaktor
- [32]: Leitung
- [33]: Leitung

## Patentansprüche

1. Verfahren zum Herstellen eines Wasserstoff und Kohlenoxide enthaltenden Rohsynthesegases durch nichtkatalytische Partialoxidation eines kohlenstoffhaltigen Einsatzstroms, der Biomasse und/oder organische Abfälle und/oder Kunststoffabfälle umfasst, mit einem sauerstoffhaltigen Oxidationsmittel in zwei hintereinandergeschalteten nichtkatalytischen Partialoxidationsreaktoren, umfassend folgende Schritte:
(a) Bereitstellen des kohlenstoffhaltigen Einsatzstroms, Bereitstellen eines ersten Oxidationsmittelstroms, Bereitstellen eines zweiten Oxidationsmittelstroms, optional Bereitstellen eines Moderatorstroms, umfassend Wasserdampf und/oder Kohlendioxid;
(b) Bereitstellen eines ersten Partialoxidationsreaktors, ausgewählt aus einer Gruppe, die folgende Reaktortypen umfasst:
(b1) Wirbelschichtreaktor mit statischer oder zirkulierender Wirbelschicht, die aus fluidisierten Partikeln des kohlenstoffhaltigen Einsatzstroms gebildet wird, wobei der erste Oxidationsmittelstrom gleichzeitig als Fluidisierungsmittel dient;
(b2) als Schachtreaktor ausgestalteter Festbettreaktor;
(b3) POX-Reaktor mit mindestens einem Brenner, der als Koaxialbrenner mit einem Zentralkanal mit kreisförmigem Querschnitt und mindestens einem, den Zentralkanal koaxial und konzentrisch umgebenden, ringspaltförmigen Außenkanal ausgestaltet ist, wobei der kohlenstoffhaltige Einsatzstrom in fluider oder fluidisierbarer Form bereitgestellt wird und wobei der kohlenstoffhaltige Einsatzstrom, der erste Oxidationsmittelstrom und der optionale Moderatorstrom durch den Zentralkanal und/oder den mindestens einen Außenkanal in den POX-Reaktor einleitbar sind;
wobei der erste Partialoxidationsreaktor eine erste Reaktionskammer, mindestens einen ersten Feed-Einlass für den kohlenstoffhaltigen Einsatzstrom, mindestens einen ersten Oxidationsmittel-Einlass für den ersten Oxidationsmittelstrom, und einen Auslass für einen ersten Rohsynthesegasstrom umfasst;
(c) Bereitstellen eines zweiten Partialoxidationsreaktors, umfassend eine zweite Reaktionskammer, einen zweiten Feed-Einlass für den ersten Rohsynthesegasstrom, optional einen zweiten Oxidationsmittel-Einlass für den zweiten Oxidationsmittelstrom, und einen zweiten Auslass für einen zweiten Rohsynthesegasstrom,
wobei weder der erste Partialoxidationsreaktor noch der zweite Partialoxidationsreaktor einen Partialoxidationskatalysator umfasst;
(d) Einleiten des kohlenstoffhaltigen Einsatzstroms über den ersten Feed-Einlass, des ersten Oxidationsmittelstroms über den ersten Oxidationsmittel-Einlass und des optionalen Moderatorstroms in den ersten Partialoxidationsreaktor;
(e) mindestens teilweises Umsetzen des kohlenstoffhaltigen Einsatzstroms mit dem ersten Oxidationsmittelstrom unter Bedingungen der nichtkatalytischen Niedertemperatur-Partialoxidation bei Temperaturen zwischen 600 und 1100 °C, bevorzugt zwischen 700 und 1000 °C, und Drücken zwischen 1 und 100 bara im ersten Partialoxidationsreaktor zu dem ersten Rohsynthesegasstrom, der Wasserstoff, Kohlenmonoxid, Kohlendioxid und Ethylen umfasst;
(f) Ausleiten des ersten Rohsynthesegasstroms aus dem ersten Partialoxidationsreaktor über den ersten Auslass;
(g) Einleiten des ersten Rohsynthesegasstroms in den zweiten Partialoxidationsreaktor über den zweiten Feed-Einlass, Einleiten des zweiten Oxidationsmittelstroms in den zweiten Partialoxidationsreaktor über den zweiten Oxidationsmittel-Einlass;
(h) mindestens teilweises Umsetzen des ersten Rohsynthesegasstroms mit dem zweiten Oxidationsmittelstrom unter Bedingungen der nichtkatalytischen Hochtemperatur-Partialoxidation bei Temperaturen zwischen 1100 und 1400 °C und Drücken zwischen 1 und 100 bara im zweiten Partialoxidationsreaktor zu einem zweiten Rohsynthesegasstrom, der Wasserstoff, Kohlenmonoxid, Kohlendioxid und Ethylen umfasst und gegenüber dem ersten Rohsynthesegasstrom an Ethylen abgereichert und an Kohlenmonoxid angereichert ist;
(i) Ausleiten des zweiten Rohsynthesegasstroms aus dem zweiten Partialoxidationsreaktor über den zweiten Auslass.

2. Verfahren nach Anspruch 1, **dadurch gekennzeichnet, dass** der erste Rohsynthesegasstrom einem Partikelabscheidungsschritt zugeführt wird und in den zweiten Partialoxidationsreaktor ein erster, an Partikeln abgereicherter Rohsynthesegasstrom eingeleitet wird.

3. Verfahren nach Anspruch 1 oder 2, **dadurch gekennzeichnet, dass** der zweite Partialoxidationsreaktor kein Element aus der folgenden Gruppe enthält:
Statischer Mischer, Füllkörper-Schüttung, fester Partialoxidationskatalysator.

4. Verfahren nach einem der vorigen Ansprüche, **dadurch gekennzeichnet, dass** die Beheizung des zweiten Partialoxidationsreaktors autotherm durch die bei der nichtkatalytischen Hochtemperatur-Partialoxidation freiwerdende Wärme erfolgt.

5. Verfahren nach einem der vorigen Ansprüche, **dadurch gekennzeichnet, dass** der erste Oxidationsmittelstrom mindestens ein Oxidationsmittel umfasst, dass aus der folgenden Gruppe ausgewählt wird:
Luft, Sauerstoff, mit Sauerstoff angereicherte Luft, Dampf, Kohlendioxid.

6. Verfahren nach einem der vorigen Ansprüche, **dadurch gekennzeichnet, dass** der zweite Oxidationsmittelstrom mindestens ein Oxidationsmittel umfasst, dass aus der nachfolgenden Gruppe ausgewählt wird:
Luft, Sauerstoff, mit Sauerstoff angereicherte Luft.

7. Verfahren nach einem der vorigen Ansprüche, **dadurch gekennzeichnet, dass** der zweite Rohsynthesegasstrom einem weiteren Reinigungs-, Konditionierungs- oder Verarbeitungsschritt zugeführt wird.

8. Verfahren nach einem der vorigen Ansprüche, **dadurch gekennzeichnet, dass** der zweite Rohsynthesegasstrom einem weiteren Verarbeitungsschritt zugeführt wird, wobei der Verarbeitungsschritt ein Syntheseverfahren umfasst, dass aus der nachfolgenden Gruppe ausgewählt wird:
Methanolsynthese, Dimethylether-Synthese, Fischer-Tropsch-Synthese, Oxosynthese, Herstellung von Phosgen, Herstellung von Essigsäure, Herstellung von Polycarbonat.

9. Verfahren nach einem der vorigen Ansprüche, **dadurch gekennzeichnet, dass** der erste und/oder der zweite Oxidationsmittelstrom Sauerstoff enthält, der mittels Elektrolyse von Wasser erzeugt wird, wobei der zweite Rohsynthesegasstrom einem weiteren Verarbeitungsschritt zugeführt wird, dem als weiterer Einsatzstoff der als Koppelprodukt der Elektrolyse erhaltene Wasserstoff zugeführt wird.

10. Verfahren nach einem der vorigen Ansprüche, **dadurch gekennzeichnet, dass** die Gaszusammensetzung in der zweiten Reaktionskammer mit einer Analysenmethode periodisch oder kontinuierlich analysiert wird.

11. Verfahren nach Anspruch 10, **dadurch gekennzeichnet, dass** die Bedingungen der nichtkatalytischen Hochtemperatur-Partialoxidation so verändert werden, dass die mit der Analysenmethode gemessene Ethylen-Konzentration kleiner als 100 Vol.-ppm, bevorzugt kleiner als 10 Vol.-ppm, meist bevorzugt kleiner als 1 Vol.-ppm auf Trockenbasis beträgt.

12. Verfahren nach Anspruch 10 oder 11, **dadurch gekennzeichnet, dass** der Mengenstrom des zweiten Oxidationsmittelstroms so verändert wird, dass die mit der Analysenmethode gemessene Ethylen-Konzentration kleiner als 100 Vol.-ppm, bevorzugt kleiner als 10 Vol.-ppm, meist bevorzugt kleiner als 1 Vol.-ppm auf Trockenbasis beträgt.

13. Verfahren nach einem der Ansprüche 10 bis 12, **dadurch gekennzeichnet, dass** die Analysenmethode aus der folgenden Gruppe ausgewählt wird:
Infrarot-Spektrometrie, Raman-Spektrometrie, Gaschromatographie.

14. Verfahren nach Anspruch 13, **dadurch gekennzeichnet, dass** die Analysenmethode mittels eines nach dieser Methode arbeitenden Analysengeräts durchgeführt ist, wobei das Analysengerät über eine Leitung mit der zweiten Reaktionskammer verbunden ist und in Fluidverbindung mit dem Gasraum der zweiten Reaktionskammer steht.

15. Verfahren nach einem der vorigen Ansprüche, **dadurch gekennzeichnet, dass** das erste Rohsynthesegas vor dem Einleiten in den zweiten Partialoxidationsreaktor keinen Verdichtungsschritt durchläuft.

16. Verfahren nach einem der vorigen Ansprüche, **dadurch gekennzeichnet, dass** der zweite Rohsynthesegasstrom einem Kohlendioxid-Abtrennungsschritt zugeführt wird, wobei ein Kohlendioxid-Reichgasstrom erhalten wird, der mindestens teilweise als Oxidationsmittel und/oder Moderator zum ersten Partialoxidationsreaktor zurückgeführt wird.
